# EUROPÄISCHE PATENTANMELDUNG

(11) **EP 2 413 110 A1**
(43) Veröffentlichungstag der Anmeldung: **01.02.2012**
(21) Anmeldenummer: 11005663.7
(22) Anmeldetag: 12.07.2011
(51) Int. Cl.: G01F 15/00, F16K 17/38

(54) **Brandschutzventil und Gaszähler**

(30) Priorität: 27.07.2010 DE 102010032345; 26.01.2011 DE 102011009438; 26.01.2011 DE 102011009437; 26.01.2011 DE 202011001955 U
(71) Anmelder: Hydrometer GmbH, 91522 Ansbach (DE)
(72) Erfinder: Hegendörfer, Andreas, 90617 Puschendorf (DE); Sonnenberg, Hans-Michael, 91522 Ansbach (DE)
(74) Vertreter: Diehl Patentabteilung

(57) **Zusammenfassung**

Brandschutzventil, insbesondere für den Gaseinlass eines Gaszählers, mit einem insbesondere zylindrischen, rohrartigen Gasleitelement und einem zum Verschließen einer Öffnung des Gasleitelements ausgebildeten Schließelement, wobei das Schließelement derart mit einem thermisch reaktiven, insbesondere aufschäumenden, Material gekoppelt ist, dass durch eine erwärmungsbedingte Ausdehnung des thermisch reaktiven Materials das Schließelement in eine die Öffnung verschließende Stellung bewegt wird.

## Beschreibung

Die Erfindung betrifft ein Brandschutzventil, insbesondere für den Gaseinlass eines Gaszählers, mit einem insbesondere zylindrischen, rohrartigen Gasleitelement und einem zum Verschließen einer Öffnung des Gasleitelements ausgebildeten Schließelement, sowie einen Gaszähler.

Gerade im Bereich der Gaszähler ist der Brandschutz, was entflammbare Gase angeht, eine wichtige Thematik, da es denkbar ist, dass im Falle eines Brandes der Gaszähler Leck schlägt und mithin brennbares, insbesondere explosionsgefährdetes Gas austritt, was zu einer steigenden Gefahr in der Brandsituation führt.

Es wurden daher in der Vergangenheit eine Vielzahl von Lösungen vorgeschlagen, um die Brandsicherheit von Gaszählern zu erhöhen. Beispielsweise wurde ein Ventil vorgeschlagen, in dem eine unter Druck stehende Feder das Ventil offenhält. Im Falle eines Brandes wird eine Ventilhalterung zerstört, die Feder entspannt sich und das Ventil wird geschlossen.

Eine weitere Lösung ist aus WO/2004/090478 A1 bekannt. Darin wird vorgeschlagen, innerhalb eines Gaszählergehäuses ein unter Wärmeeinwirkung blähfähiges Material anzuordnen und ein Einkapselungsvolumen für das blähfähige Material zur Verfügung zu stellen, wobei bei irreversibler Ausdehnung des blähfähigen Materials im Brandfall das Einkapselungsvolumen aufgefüllt wird, so dass Gasleckageöffnungen im Gaszählergehäuse abgedichtet werden. Das Gaszählergehäuse ist weiterhin hitzebeständig, so dass dem blähfähigem Material auch im Brandfall ein angemessener, nicht zu großer Expansionsraum zur Verfügung steht. So soll eine Leckage von Gas im Brandfall und eine damit verbundene Explosionsgefahr vermieden werden. Dies ist jedoch nachteilhaft, da keine vollständige Sicherheit gegeben wird, insbesondere, da das Expansionsverhalten des blähfähigen Materials ungeführt und daher nicht immer absolut vorhersagbar ist. Zudem muss der Gaszähler zwangsläufig ein feuerfestes Gehäuse aufweisen, damit nicht doch durch Zerstörung des Gaszählers wieder Lecks entstehen können, so dass der Gaszähler konstruktiv aufwendig und teuer ist.

Eine Gasrohrverbindung, die eine thermisch expandierende Substanz auf der Innenseite an der Verbindungsstelle aufweist, wird durch JP 2004/093546 (A) offenbart. Erhitzt sich die Verbindung, dehnt sich die Substanz aus und verschließt den Durchlass. Allerdings ist auch hier die Expansion der Substanz nicht vorhersagbar, so dass keine hinreichende Sicherheit vor einem Gasleck gegeben ist.

Der Erfindung liegt daher die Aufgabe zugrunde, ein Brandschutzventil für den Gaseinlass eines Gaszählers zu schaffen, bei dem eine erhöhte Verlässlichkeit der Brandsicherung gegeben ist.

Zur Lösung dieser Aufgabe ist bei einem Brandschutzventil der eingangs genannten Art erfindungsgemäß vorgesehen, dass das Schließelement derart mit einem thermisch reaktiven, insbesondere aufschäumenden Material gekoppelt ist, dass durch eine erwärmungsbedingte Ausdehnung des thermisch reaktiven Materials das Schließelement in eine die Öffnung verschließende Stellung bewegt wird.

Auch die vorliegende Erfindung schlägt also die Verwendung eines thermisch reaktiven Materials vor, welches bei Überschreitung einer Schwelltemperatur beziehungsweise eines Schwelltemperaturbereichs einen irreversiblen Ausdehnungsvorgang vornimmt, insbesondere durch ein Aufschäumen. Im Unterschied zum Stand der Technik ist es jedoch hier wie bei einem üblichen Ventil ein Schließelement, welches tatsächlich den Gasfluss, insbesondere am Eingang eines Gaszählers, verlässlich und geführt unterbricht. Das thermisch reaktive Material liegt also geführt und unbeeinflusst vom aktuellen Gasfluss durch das Brandschutzventil derart vor, dass es an das Schließelement gekoppelt ist und dieses zum Verschließen der Öffnung des Gasleitelements gegen eben diese Öffnung presst. Es wird also vorgeschlagen, den irreversiblen Ausdehnungsvorgang durch die Kopplung an das Schließelement kontrolliert und unbeeinflusst von dem Gasfluss vorzunehmen, so dass eine höhere Verlässlichkeit besteht. Insbesondere ist es denkbar, das thermisch reaktive Material so anzuordnen, dass es früher zu einem Schließen des Ventils kommt, da eine schnellere Erhitzung im Brandfall eintritt. Der Aktor, der das Schließen des Ventils verursacht, ist also das thermisch reaktive Material.

Neben der erhöhten Abdichtungssicherheit, die durch die kontrollierte Ausdehnung des Materials, welche beispielsweise in einer Expansionskammer stattfinden kann, gegeben ist, bietet das erfindungsgemäße Brandschutzventil auch weitere Vorteile. So kann das Brandschutzventil insbesondere am Gaseinlass eines Zählers vorgesehen werden, so dass bereits der Einlauf des Gaszählers abgedichtet wird. Dies ermöglicht es beispielsweise, das Gehäuse des Gaszählers aus einem nicht feuerfesten Material, beispielsweise aus Kunststoff, aufzubauen, so dass eine erhöhte Kostenersparnis gegeben ist. Wird, wie bereits erwähnt, das Material beispielsweise nahe einer Gehäusewand oder dergleichen angeordnet, so folgt eine schnellere Erhitzung sowie ein schnelleres Reagieren des thermisch reaktiven Materials, wobei zu bedenken ist, dass auch grundsätzlich bei einer entsprechenden Auslegung des Brandschutzventils eine geringere Menge des Materials benötigt wird.

Ersichtlich sind viele Möglichkeiten denkbar, das erfindungsgemäße Brandschutzventil konkret auszugestalten. In einer besonders vorteilhaften konkreten Ausgestaltung kann jedoch vorgesehen sein, dass ein gegen das Gasleitelement bewegbares Ventilelement mit einem an dem Gasleitelement geführten Führungsabschnitt und dem mit dem Führungsabschnitt durch einen gasdurchlässigen Abschnitt gekoppelten Schließelement, insbesondere einer Ventilkappe, sowie ein das Gasleitelement und das Ventilelement umschließendes Gehäuse vorgesehen sind, wobei zwischen dem Gasleitelement und dem Gehäuse eine Expansionskammer gebildet ist, die durch einen Trennabschnitt des Ventilelements in einen Materialbereich und einen Expansionsbereich derart aufgeteilt ist, dass bei einer erwärmungsbedingten Ausdehnung des in dem Materialbereich angeordneten thermisch reaktiven Materials der Trennabschnitt in den Expansionsbereich gepresst wird, bis das Schließelement den Gasleitabschnitt verschließt. Bei dieser äußerst platzsparenden realisierbaren Ausgestaltung ist mithin vorgesehen, eine Expansionskammer für das Material zwischen einer Gehäusewand und dem Gasleitelement zu bilden. Dabei kann die Ausgestaltung so gewählt werden, dass bei geöffnetem Ventil der Trennabschnitt des Ventilelements, der letztlich eine Art Mitnehmer bildet, eine unmittelbare Begrenzung des Materialbereichs bildet. Da es sich dabei um die einzige bewegliche Begrenzung des Materialbereichs handelt, ist der Expansionsvorgang letztlich geführt, da eine erwärmungsbedingte Ausdehnung des Materials nur den Trennabschnitt in den Expansionsbereich pressen kann, wobei die gesamte Bewegung durch die Führung mittels des Führungsabschnitts an dem Gasleitelement gerichtet wird. Das Schließelement, welches ja wiederum durch den gasdurchlässigen Abschnitt mit dem als Mitnehmer wirkenden Trennabschnitt gekoppelt ist, wird dann einfach auf die Öffnung des Gasleitelements gepresst. Im Prinzip kann man also auch das Gasleitelement als eine Art feststehende Hülse betrachten, das Ventilelement mit dem Schließelement als eine bewegliche Hülse, welche durch das Material das Gasleitelement verschließend auf die Öffnung des Gasleitelements gepresst wird. In dieser Ausgestaltung lässt sich nicht nur ein äußerst platzsparendes und kompaktes Brandschutzventil realisieren, sondern es wird auch relativ wenig thermisch reaktives Material benötigt, welches zudem unmittelbar benachbart zur Gehäusewand angeordnet ist und daher schnell auf die Temperatur bzw. den Temperaturbereich der irreversiblen Ausdehnung erhitzt wird, wenn ein Brandfall eintritt.

Dabei kann, um die mechanische Stabilität dieser konkreten Ausführung weiter zu unterstützen, vorgesehen sein, dass der hülsenartig ausgebildete Führungsabschnitt das Gasleitelement koaxial umschließt und zwischen der Gehäusewand und dem Gasleitelement geführt ist. Dabei kann beispielsweise vorgesehen sein, dass sich das Gehäuse zur Bildung der Expansionskammer dann aufweitet.

Zweckmäßigerweise kann ferner vorgesehen sein, dass der Trennabschnitt durch einen am Rand des Führungsabschnitts umgebogenen Kragen gebildet ist. In einer derartigen Ausgestaltung kann, insbesondere bei der beschriebenen koaxialen Ausbildung von Führungsabschnitt und Gasleitelement letztlich die Expansionskammer eine Hohlzylinderform aufweisen, die folglich durch Bilden eines Kragens einfach in den Materialbereich und den Expansionsbereich unterteilt werden kann, während das gesamte Brandschutzventil im Wesentlichen symmetrisch ausgebildet ist.

Mit besonderem Vorteil kann das Gehäuse durch einen Gewindeanschluss des Gaszählers gebildet werden. Auf diese Weise ist es letztlich möglich, das Brandschutzventil unmittelbar in die Konstruktion des Gaseinlasses eines Gaszählers zu integrieren. Durch die Doppeltnutzung des Gewindeanschlusses auch als Gehäuse des Brandschutzventils sind keine weiteren, gegebenenfalls umständlichen Kopplungen mehr erforderlich.

In einer weiteren, alternativen, besonders vorteilhaften Ausführungsform der vorliegenden Erfindung kann vorgesehen sein, dass das Gasleitelement durch den in das Innere des Gaszählers mündenden Leitungsabschnitt des Einlasses gebildet wird. Auf diese Weise wird ein wesentliches Element des Brandschutzventils durch den Einlass selber gebildet, so dass insgesamt ein einfacherer Aufbau des Brandschutzventils möglich ist. Insbesondere ist es möglich, einen nachmontierbaren Brandschutzeinsatz zu schaffen, der gemeinsam mit dem Leitungsabschnitt das Brandschutzventil bildet.

So kann in Weiterbildung dieser Ausführungsform vorgesehen sein, dass ein mittels wenigstens eines Befestigungsmittels in dem Leitungsabschnitt befestigter Brandschutzeinsatz vorgesehen ist, der eine das im Einbauzustand bei nicht ausgedehntem Material außerhalb des Leitungsabschnitts befindliche Schließelement führende und tragende Halterungsvorrichtung umfasst. Es wird also ein Einsatz verwendet, der mit besonderem Vorteil ohne Öffnung des Gehäuses des Gaszählers, insbesondere also, wenn letzteres schon verbördelt ist oder dergleichen, einsetzbar ist. Der Brandschutzeinsatz wird dann durch den Einlass eingeschoben, bis die Befestigungsmittel des Einsatzes und des Leitungsabschnitts miteinander wechselwirken, so dass der Brandschutzeinsatz sozusagen "einrastet". Die Einrastposition ist so gewählt, dass der freie, breitere Raum im Inneren des Gaszählergehäuses genutzt wird, um das Schließelement im Grundzustand zu lagern, welches ja ausgebildet ist, das Gasleitelement in Form des Leitungsabschnittes zu verschließen. Durch das Material wird das Schließelement dann von seiner Stellung im Innenraum des Gaszählers in die die Öffnung des Gasleitelements (insbesondere die Öffnung in das Innere des Gaszählers) verschließende Stellung zu bewegen.

Dabei wird es besonders bevorzugt, wenn die Halterungsvorrichtung und das Schließelement, welche insbesondere als ineinandergesteckte Hülsen ausgebildet sind, eine Expansionskammer für das Material definieren. Das bedeutet, dass das Material in einem im Wesentlichen geschlossenen Volumen zwischen den beiden Hülsen angeordnet ist, wobei bei der Ausdehnung die Hülsen gegeneinander verschoben werden, so dass das Schließelement in die die Öffnung verschließende Stellung gebracht wird, wobei die Ausdehnung des thermisch reaktiven Materials definiert in der durch die Hülsen gebildeten Expansionskammer erfolgt. Auf diese Weise ist also auch in der hier beschriebenen Ausführungsform eine äußerst gezielte und definierte Wirkung der Ausdehnung des Materials realisierbar, durch die mit hoher Verlässlichkeit das Schließelement in die die Öffnung verschließende Stellung gebracht wird.

In einer konkreten Ausgestaltung kann dabei vorgesehen sein, dass beide Hülsen als geschlossene Hülsen ausgebildet sind, wobei das Schließelement in den hülsenartigen Anteil der Halterungsvorrichtung derart formschlüssig eingesetzt ist, die eine Hülse ist also so in der anderen Hülse bzw. dem hülsenartigen Anteil der Halterungsvorrichtung geführt, dass die Hülsen über die gesamte Bewegungsstrecke in die die Öffnung verschließende Stellung ein im Wesentlichen geschlossenes Volumen, mithin eine definierte Expansionskammer, bilden. Mit anderen Worten ist die Bewegungsstrecke des Schließelements größer als die Höhe der Hülse, so dass die Expansionskammer seitlich geschlossen bleibt.

In einer anderen Ausgestaltung kann vorgesehen sein, dass die Halterungsvorrichtung und das Schließelement geschlitzte Hülsen mit Stegen sind, so dass die Stege des Schließelements passgenau zwischen den Stegen der Halterungsvorrichtung eingreifen. Es ist also auch eine geschlitzte Ausgestaltung der Hülsen bzw. hülsenartigen Anteile denkbar, wobei die beiden Hülsen, deren Radius in diesem Fall gleich ist, ineinanderliegen. Da die Stege sich gegenseitig ergänzen, ist auch hier eine seitlich geschlossene Expansionskammer realisiert. In dieser Ausgestaltung können vorzugsweise die Stege der Halterungsvorrichtung in eine Nut des Leitungsabschnitts eingreifende Vorsprünge an ihren Enden aufweisen. Sind die Stege leicht elastisch ausgebildet, kann der Brandschutzeinsatz durch den Einlass einfach solange eingeschoben werden, bis die Vorsprünge der Stege in die Nut einrasten und der Brandschutzeinsatz befestigt ist, so dass das Brandschutzventil gebildet wird.

Es sei an dieser Stelle noch angemerkt, dass eine besonders einfache Bauweise des Brandschutzeinsatzes realisiert werden kann, wenn bei der Ausgestaltung mit zwei geschlossenen Hülsen unterschiedlichen Durchmessers ein Drahtelement verwendet wird, welches zum einen einen insbesondere entlang der Mittelachse der Hülsen verlaufenden Trage- und Führungsabschnitt aufweist, zum anderen aber auch einen Befestigungsabschnitt hat, der beispielsweise nach Art einer Ringfeder zu einem Federelement gebogen sein kann. Ein derartiges Federelement kann wiederum in eine entsprechende Nut des Leitungsabschnitts eingreifen.

Ersichtlich nehmen beide hier beschriebenen Befestigungsarten lediglich einen sehr kleinen Anteil des Einlassquerschnittes hinweg, so dass nur eine sehr geringe Beeinträchtigung des Gasflusses auftreten kann.

Allgemein kann also gesagt werden, dass das Befestigungsmittel vorzugsweise ein in eine Nut des Leitungsabschnitts eingreifender Abschnitt oder Vorsprung der Halterungsvorrichtung ist.

Die die Öffnung verschließende Stellung des Schließelements kann durch eine Schulter des Einlasses und/oder durch das Befestigungsmittel definiert sein. Das bedeutet, es wird entweder eine bestimmte Ausbildung des Leitungsabschnitts vorgenommen, beispielsweise eine Radiusveränderung, die sich in Form einer Schulter äußert, oder das Schließelement stößt letztlich an das beispielsweise in eine Nut des Leitungsabschnitts eingreifende Befestigungsmittel ein, welches die Endstellung definiert.

In den Ausführungsformen, in denen die Halterungsvorrichtung und das Schließelement als ineinandergesteckte Hülsen ausgebildet sind, die eine Expansionskammer für das Material definieren, kann in weiterer vorteilhafter Ausbildung der vorliegenden Erfindung vorgesehen sein, dass in der die Öffnung verschließenden Fläche des Schließelements wenigstens eine Materialöffnung vorgesehen ist. Eine derartige Öffnung sollte dabei eher klein dimensioniert sein, so dass beispielsweise der Anteil aller Materialöffnung an der Gesamtfläche der Verschlussfläche des Schließelements kleiner als 10 %, insbesondere kleiner als 5 %, ist. Solche kleinen Materialöffnungen lassen somit keinen Austritt des sich ausdehnenden Materials zu, solange noch die Expansionskammer durch Bewegung des Schließelements in die die Öffnung verschließende Stellung aufgefüllt wird, sondern dienen erst, wenn die Expansionskammer vollständig aufgefüllt ist, als Auslassöffnungen für eine bestimmte Menge des ausgedehnten Materials, so dass das Material weiter in den Einlass fließen kann, um den Spalt zwischen dem Ventilelement und dem Leitungsabschnitt gasdicht abzuschließen. Das austretende Material kann also beispielsweise mit dem Befestigungsmittel, dem Leitungsabschnitt und insbesondere auch der Nut verkleben, um eine noch bessere Abdichtung zu erzielen.

Nachdem die bisherigen Ausführungsbeispiele hauptsächlich auf eine kontrollierte Expansion eines (dreidimensional) expandierenden, thermisch reaktiven Materials gerichtet waren, kann in einer vorteilhaften Alternative zu einer solchen Expansionskammer zur Bewegung des Schließelements auch vorgesehen sein, dass das thermisch reaktive Material ein in einer Vorzugsrichtung expandierendes Material ist, wobei das Material so angeordnet ist, dass die Vorzugsrichtung der Schließrichtung des Schließelements entspricht. In diesem Fall wird also ein thermisch reaktives Material hergenommen, das bei seiner Expansion eine Vorzugsrichtung aufweist, mithin im Rahmen der Expansion gezielt das Schließelement in seine das Gasleitelement verschließende Stellung bewegt. Ein solches, eine Vorzugsrichtung bei der Expansion aufweisendes Material schäumt hart auf und ist daher in der Lage, auch ohne eine es begrenzende und führende Expansionskammer das Schließelement des Brandschutzventils geführt in die Schließstellung zu bewegen. In dieser Ausführungsform sind also konstruktiv günstigere Gestaltungsarten denkbar.

Vorzugsweise kann das Material ein Treibmittel auf Silikatbasis mit kristallin gebundenem Wasser sein. So wird ein Treibmittel als in einer Vorzugsrichtung expandierendes Material geschaffen, das bei 100°C zu reagieren beginnt. Im Ergebnis bildet sich eine feste, kompakte Masse, die nur in die Vorzugsrichtung aufschäumt und das Schließelement nach dem Aufschäumen in der geschlossenen Stellung hält.

In weiterer Ausgestaltung dieser Ausführungsform kann vorgesehen sein, dass das von einer Stützplatte getragene Material das Schließelement trägt. Dabei ist es besonders vorteilhaft, wenn das Schließelement an einer wenigstens teilweise zu der Stützplatte hin verlaufenden Begrenzungswand des Gasleitelements und/oder an einer die Stützplatte mit dem Gasleitelement verbindenden Führungsstruktur geführt ist. Auf diese Weise wird das Schließelement unmittelbar durch das in der Vorzugsrichtung expandierende Material getragen und bewegt, während vorteilhafte Führungsmöglichkeiten für das Schließelement angegeben sind. In diesem Zusammenhang ist es zweckmäßig so, dass die Anordnung derart ist, dass das durch das Gasleitelement auf das geöffnete Schließelement zuströmende Gas durch wenigstens eine zur Schließeinrichtung seitliche Öffnung weiter in den Gaszähler hineinströmt. Die Stützplatte versperrt auf diese Weise mithin den Gasfluss genauso wenig wie das Material, nachdem das Gas bei geöffnetem Brandschutzventil weiter in den Gaszähler hineinströmen kann.

Dabei sei an dieser Stelle angemerkt, dass sich ein Brandschutzventil der erfindungsgemäßen Art auch besonders vorteilhaft in einen einen kombinierten Gaseinlass und Gasauslass bildenden Einrohranschluss des Gaszählers integrieren lässt. Es kann mithin vorgesehen sein, dass das Brandschutzventil in einen einen kombinierten Gaseinlass und Gasauslass bildenden Einrohranschluss des Gaszählers integriert ist, bei dem ein zentraler, zylinderartiger Gasleitabschnitt den Gasauslass bildet und den Gasauslass mit einem insbesondere ringförmigen Querschnitt umgebend der Gaseinlass als Gasleitelement des Brandschutzventils vorgesehen ist. Während die Verwendung der anderen, entsprechend angepassten Ausführungsbeispiele des erfindungsgemäßen Brandschutzventils in einem derartigen Einrohranschluss (häufig auch Einrohrstutzen genannt) möglich ist, kann insbesondere in dem Fall, dass ein in Vorzugsrichtung expandierendes Material auf einer Stützplatte verwendet wird, in einer besonders vorteilhaften Ausgestaltung vorgesehen sein, dass die Stützplatte an einer Trennwand zwischen dem Gaseinlass und dem Gasauslass angeordnet ist, insbesondere durch Verstemmen, während Gas durch wenigstens eine der Trennwand radial gegenüberliegende Öffnung in das Innere des Gaszählers geführt wird, so dass zum Schließen des Brandschutzventils das Schließelement an der Öffnung vorbeibewegt wird und das Gasleitelement verschließt. Häufig sind die Ausgestaltungen von derartigen Einrohranschlüssen ohnehin so, dass der Gasauslass über eine gegenüber dem Gaseinlass verlängerte Trennwand zu dem Gaseinlass bis ins Innere des Gaszählers hinein weitergeführt wird, während das durch den Gaseinlass strömende Gas seitlich in den Gaszähler weitergeführt werden kann. Mithin bietet sich die Trennwand an, um beispielsweise nach Art eines flachen Rings die Stützplatte, insbesondere durch Verstemmen, an dieser Trennwand anzuordnen. Auf der Stützplatte ist dann das in der Vorzugsrichtung hin zum Gaseinlass expandierende thermisch reaktive Material angeordnet, auf dem wiederum - geführt durch die zylinderförmige Trennwand - das Schließelement gelagert ist, welches dann bei Expansion des thermisch reaktiven Materials in den Gaseinlass als Gasleitelement, diesen verschließend, gepresst wird. Hierzu kann ein geeigneter Anschlag oder dergleichen vorgesehen sein oder werden.

In einer besonders bei Verwendung eines in Vorzugsrichtung expandierenden thermisch reaktiven Materials zur Bewegung des Schließelements bevorzugt eingesetzten, aber auch allgemein äußerst vorteilhaften Ausführungsbeispiel kann vorgesehen sein, dass das Schließelement eine Aufnahme mit einem zweiten, bei einer höheren Temperatur als das erste, das Schließelement bewegende thermisch reaktive Material reagierenden, thermisch reaktiven Materials aufweist. Ist das Schließelement mithin in dem Gasleitelement in seine dieses verschließende Stellung bewegt worden, reagiert bei einem weiteren Temperaturanstieg das in der Aufnahme befindliche, zweite thermisch reaktive Material und verschließt die letzten verbliebenen Spalten und Lücken, so dass eine absolut gasdichte Abdichtung gegeben ist. Bei dieser Ausgestaltung wird insbesondere der Vorteil genutzt, dass die Aufnahme, in der sich das zweite, thermisch reaktive Material befindet, gemeinsam mit dem Gasleitelement eine geschlossene Expansionskammer bildet, so dass das zweite thermisch reaktive Material bei einem besonders hohen Innendruck die kleinen Spalte ausfüllt, hierbei besonders hart und kompakt wird, so dass im Übrigen auch eine höhere Stabilität gegen den Druck des Gases entsteht. Es ist also durchaus möglich, konstruktiv auch die Aufnahme relativ offen zu gestalten, wobei die Aufnahme letztlich so ausgebildet ist, dass sie mit wenigstens einer Wand des Gasleitelements eine Expansionskammer für das zweite thermisch reaktive Material bildet.

So kann beispielsweise in konkreter Ausgestaltung vorgesehen sein, dass das Schließelement durch zwei parallele, fest verbundene Platten gebildet wird, zwischen denen das zweite Material angeordnet ist. Dabei ist es letztlich nicht relevant, dass die Aufnahme hierbei seitlich offen ist, nachdem das zweite Material ohnehin erst dann zu expandieren beginnt, wenn das Schließelement in die den Gasleitabschnitt verschließende Stellung bewegt wird und mithin seitlich die Wände des Gasleitelements die Expansionskammer gemeinsam mit den Platten definieren, so dass das zweite Material behindert wird, sich frei zu entfalten und genug Druck aufgebaut wird, um den Restspalt verlässlich abzudichten. Hierzu sind die beiden Platten des Schließelements fest verbunden, beispielsweise über die beiden Platten verbindende Klammern oder dergleichen. Beispielsweise können die beiden Platten miteinander verschweißt oder anderweitig verbunden sein.

Das zweite thermisch reaktive Material kann dabei ein Material auf Graphitbasis sein, welches insbesondere bei Temperaturen zwischen 180°C und 200°C, beispielsweise bei 190°C, reagiert. Das zweite Material weist keine Vorzugsrichtung bei der Expansion auf und schäumt mithin dreidimensional auf. Wird es behindert, beispielsweise, da es in einer Expansionskammer nur noch schmale Spalte abdichten muss, entsteht eine feste, kompakte Masse.

Wie bereits erwähnt wurde, lässt sich die Verwendung des zweiten thermisch reaktiven Materials besonders vorteilhaft mit der Verwendung eines eine Vorzugsrichtung bei der Expansion aufweisenden ersten thermisch reaktiven Materials kombinieren, nachdem das in der Vorzugsrichtung expandierende thermisch reaktive Material naturgemäß nicht notwendig alle Spalten zwischen dem Schließelement und dem Gasleitelement abzudichten in der Lage ist. In diesem Fall entsteht dann ein zweistufiger Prozess, so dass zunächst das erste thermisch reaktive Material, beispielsweise bei 100°C, reagiert, und das Schließelement in die Schließstellung in das Gasleitelement schiebt. Dort reagiert nun bei einer höheren Temperatur, beispielsweise 190°C, das zweite thermisch reaktive Material und dichtet den verbleibenden, geringen Restspalt ab.

Das Schließelement kann ferner im Allgemeinen eine thermisch beständige Dichtung umfassen. Wird eine thermisch beständige Dichtung benutzt, wird zum einen durch die Dichtfunktion der thermisch beständigen Dichtung die durch das Schließelement erzwungene Abdichtung verbessert, zum anderen aber ist die Dichtung auch thermisch beständig gewählt, so dass selbst bei höheren Temperaturen die Sperrwirkung des Brandschutzventils nicht aufgehoben wird.

In besonders vorteilhafter Ausgestaltung der vorliegenden Erfindung kann vorgesehen sein, dass das Brandschutzventil wenigstens eine Schließeinrichtung zum reversiblen Schließen und Öffnen des Ventils durch das Schließelement unabhängig von dem Material umfasst. Auf diese Weise kann das erfindungsgemäße Brandschutzventil mit einem Shut-Off-Ventil realisiert werden. Es ist also ein weiterer Aktor vorgesehen, der jedoch zum reversiblen Schließen/Öffnen des Ventils ausgebildet ist, so dass beispielsweise auch benutzergesteuert oder mittels einer das Ventil ansteuernden Automatik eine Unterbrechung der Gaszufuhr realisiert werden kann. Beispielsweise kann vorgesehen sein, dass die Schließeinrichtung eine magnetische Schließeinrichtung ist, das bedeutet, das Ventil ist für diesen Fall ein Magnetventil. Beispielsweise kann ein magnetisch ausgestaltetes Schließelement (insbesondere auch das gesamte Ventilelement) durch einen externen Elektromagneten bewegt werden oder dergleichen. Besonders vorteilhaft bei dieser Ausgestaltung als kombiniertes Shut-Off-Ventil und Brandschutzventil ist, dass die Absperrung im Fehlerfall, also im Brandfall, sowohl bei geschlossenem als auch bei geöffnetem Ventil wirksam ist.

Neben dem Brandschutzventil betrifft die Erfindung auch einen Gaszähler, umfassend einen mit einem erfindungsgemäßen Brandschutzventil versehenen Gaseinlass. Bei geöffnetem Brandschutzventil kann das Gas also problemlos, beispielsweise durch die Öffnungen im gasdurchlässigen Abschnitt, in den Zähler gelangen. Tritt ein Brand und die damit einhergehende Hitze auf, so wird sich das thermisch reaktive Material irreversibel ausdehnen und den Gaseinlass sicher und verlässlich verschließen. Dies ermöglicht es, den erfindungsgemäßen Gaszähler beispielsweise großenteils aus Kunststoff herzustellen, insbesondere ein Gaszählergehäuse aus Kunststoff vorzusehen.

Sämtliche Ausführungen bezüglich des Brandschutzventils lassen sich analog auf den erfindungsgemäßen Gaszähler übertragen. Auf diese Weise werden auch die oben bereits beschriebenen Vorteile erreicht.

Insbesondere kann jedoch vorgesehen sein, dass ein Gewindeanschluss des Gaseinlasses des Gaszählers ein Gehäuse des Brandschutzventils bildet. Auf diese Weise ist eine hervorragende Integration des Brandschutzventils in den Gaszähler gegeben.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Querschnitt durch ein erfindungsgemäßes Brandschutzventil,
- Fig. 2: eine Ansicht des Brandschutzventils in geöffnetem Zustand,
- Fig. 3: eine Ansicht des Brandschutzventils in geschlossenem Zustand,
- Fig. 4: einen Querschnitt durch ein erfindungsgemäßes Brandschutzventil einer zweiten Ausführungsform,
- Fig. 5: einen Fig. 4 entsprechenden Querschnitt bei geschlossenem Schließelement,
- Fig. 6: eine perspektivische Ansicht eines geschlitzte Hülsen aufweisenden Brandschutzeinsatzes,
- Fig. 7: eine Schnittansicht des Brandschutzeinsatzes gemäß Fig. 6,
- Fig. 8: ein weiteres Ausführungsbeispiel eines Brandschutzeinsatzes in einer Schnittansicht,
- Fig. 9: eine in einen Einrohranschluss integrierte dritte Ausführungsform eines erfindungsgemäßen Brandschutzventils,
- Fig. 10: in den Einrohranschluss einzusetzende Komponenten des Brandschutzventils gemäß Fig. 9, und
- Fig. 11: eine teilweise geschnittene Ansicht des Brandschutzventils aus Fig. 9 in einem Brandfall.

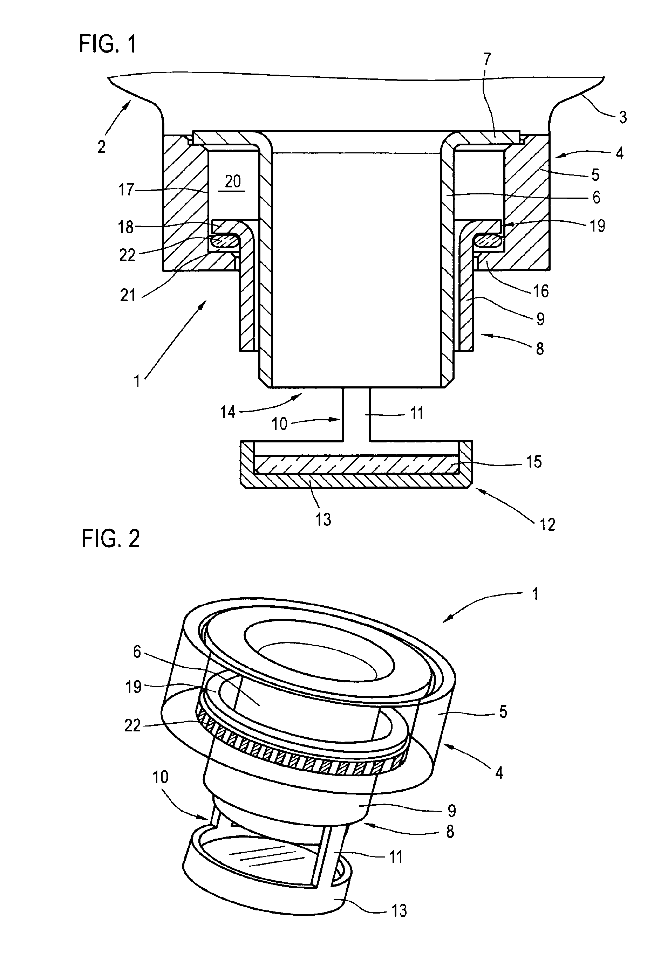

Fig. 1 zeigt einen Querschnitt durch ein erfindungsgemäßes Brandschutzventil 1. Es ist am Gaseinlass 2 eines nur angedeuteten erfindungsgemäßen Gaszählers 3 vorgesehen.

Ersichtlich weist der Gaszähler 3 einlassseitig einen Gewindeanschluss 4 auf, der gleichzeitig als Gehäuse 5 für das Brandschutzventil 1 dient.

Das Brandschutzventil 1 umfasst ein feststehendes, an dem Gehäuse 5 befestigtes Gasleitelement 6, welches rohrartig ausgebildet ist und zur Befestigung am gaszählerseitigen Ende des Gehäuses 5 einen Kragen 7 aufweist. Gegen das Gasleitelement beweglich geführt ist ein Ventilelement 8, welches einen hülsenartigen, zu dem Gasleitabschnitt 6 koaxialen Führungsabschnitt 9 umfasst, an dem über einen gasdurchlässigen Abschnitt 10, hier gebildet durch Stege 11, ein Schließelement 12 befestigt ist, welches vorliegend als eine Ventilkappe 13 ausgebildet ist. Die Ventilkappe 13 passt ersichtlich genau über die ihr zugewandte Öffnung 14 des Gasleitabschnitts 6. In der Ventilkappe 13 ist eine thermisch beständige Dichtung 15 angeordnet, die, wenn die Ventilkappe 13 auf die Öffnung 14 gepresst wird, eine verbesserte, auch im Brandfall beständige Abdichtung des Gaseinlasses 2 ermöglicht.

Ersichtlich weist der das Gehäuse 5 bildende Gewindeabschnitt 4 dem übrigen Gaszähler 3 abgewandt noch eine Schulter 16 auf, so dass im Bereich der Schulter der Radius des Gehäuses 5 verengt ist und dass letztlich der Führungsabschnitt 9 zwischen dem Gehäuse 5, konkret der Schulter 16, und dem Gasleitabschnitt 6 stabil geführt ist.

Begrenzt durch den Gasleitabschnitt 6 mit seinem Kragen 7 und das Gehäuse 5 mit seiner Schulter 16 ergibt sich ersichtlich in dem Bereich größeren Radius eine Expansionskammer 17. Ersichtlich weist ferner der Führungsabschnitt 9 ebenso einen nach außen gebogenen Kragen 18 auf, der als Trennabschnitt 19 die Expansionskammer 17 in zwei Bereiche 20, 21 unterteilt. In dem Materialbereich 21 ist ein thermisch reaktives, aufschäumendes Material 22 derart angeordnet, dass in der geöffneten Stellung des Ventilelements 8 der Kragen 18 an ihm anliegt.

Steigt nun die Temperatur über eine Schwelltemperatur bzw. einen Schwelltemperaturbereich, insbesondere durch einen Brand, tritt eine irreversible Ausdehnung des Materials 21 auf. Dieses presst den Trennabschnitt 19 in den Expansionsbereich 20, so dass, geführt durch die Schulter 16 und den Gasleitabschnitt 6 das Schließelement 12 auf die Öffnung 14 zubewegt wird, bis sie gegen das Gasleitelement 6 gepresst wird und eine die Öffnung 14 verschließende Stellung einnimmt.

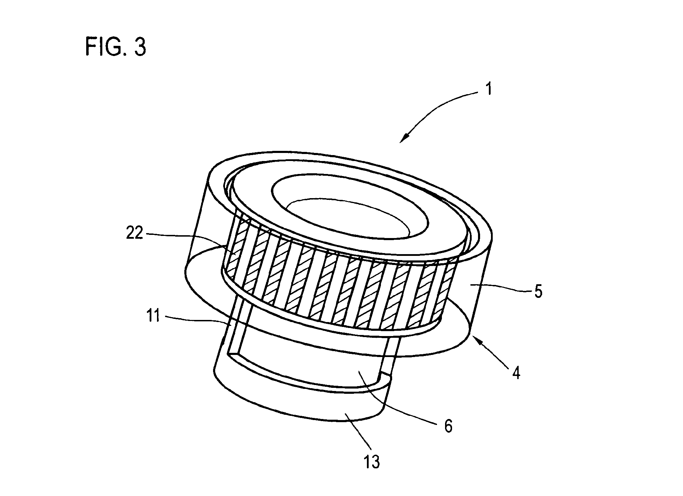

Dies wird durch die perspektivischen Ansichten in Fig. 2 und Fig. 3 nochmals näher erläutert, wobei zur besseren Darstellung der Gewindeabschnitt 4, der das Gehäuse 5 bildet, transparent dargestellt ist. Fig. 2 zeigt die geöffnete Stellung des Brandschutzventils 1, in der Gas durch den gasdurchlässigen Abschnitt 10 in den Gaszähler 3 hineinströmen kann. Die Ventilkappe 13 ist von der Öffnung 14 ersichtlich beabstandet; das Material 22 füllt nur den Materialbereich 21 auf.

Fig. 3 zeigt nun die Situation, wenn das Material 22 aufgeschäumt ist. Offensichtlich füllt es nun im Wesentlichen die gesamte Expansionskammer 17 aus. Der Kragen 18 wurde nach oben gepresst, so dass die Ventilkappe 13, getragen von den Stegen 11 und dem Führungsabschnitt 9, über die Öffnung 14 gegen das Gasleitelement 6 gepresst wird, so dass, insbesondere im Zusammenhang mit der Dichtung 15, ein brandsicherer Verschluss gegeben ist, der verhindert, dass noch Gas in den Gaszähler 3 einströmt.

Es sei an dieser Stelle noch angemerkt, dass das erfindungsgemäße Brandschutzventil auch eine weitere, hier nicht näher dargestellte Schließeinrichtung umfassen kann, die ein reversibles Schließen und Öffnen des Ventils auch unabhängig von dem Material ermöglicht. Dann kann das Ventil 1 auch als Shut-Off-Ventil verwendet werden. Besonders geeignet dabei sind magnetische Schließeinrichtungen, die über einen Elektromagneten als Aktor das Schließelement bewegen können.

Thermisch reaktive Materialien, also insbesondere aufschäumende bzw. blähfähige Materialien, die im erfindungsgemäßen Brandschutzventil 1 eingesetzt werden können, sind im Stand der Technik weiterhin bekannt. Rein beispielhaft sei auf Blähgimmer und/oder Kombinationen aus Polyesterharz und Härter, gegebenenfalls mit einem Füllstoff, verwiesen. Auch Vermiculit kann verwendet werden. Zweckmäßigerweise kann durch Kombination der genannten oder weiterer Materialien ein Material 22 geschaffen werden, welches für die spezielle Verwendungsumgebung ideal geeignet ist.

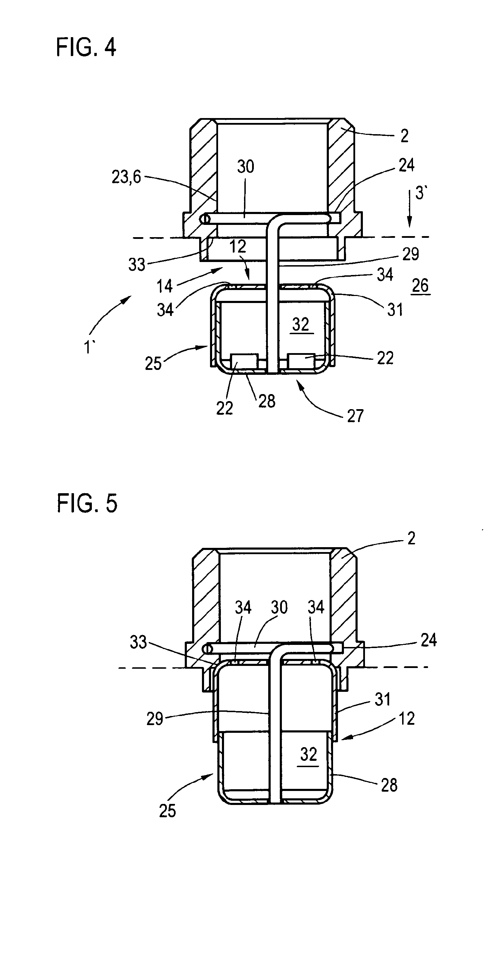

Mit Bezug auf die Figuren 4 - 7 werden nun weitere Ausführungsbeispiele der vorliegenden Erfindung dargestellt, wobei der Übersichtlichkeit halber gleiche Bestandteile mit gleichen Bezugszeichen versehen sind.

Fig. 4 zeigt ein erfindungsgemäßes Brandschutzventil 1' in einer weiteren Ausführungsform, wie es in einem wiederum nur angedeuteten erfindungsgemäßen Gaszähler 3' realisiert werden kann. Der Gaseinlass 2 weist ersichtlicht einen unteren Leitungsabschnitt 23 auf, in dem eine Nut 24 vorgesehen ist. Die Nut 24 dient als einlassseitiges Befestigungsmittel für einen Brandschutzeinsatz 25, der gemeinsam mit dem Leitungsabschnitt 23 das Brandschutzventil 1' bildet. Dabei stellt der Leitungsabschnitt 23 in diesem Fall das Gasleitelement 6 dar, welches eine dem Innenraum 26 des Gaszählers 3' zugewandte Öffnung 14 aufweist.

Der Brandschutzeinsatz 25 weist eine Halterungsvorrichtung 27 auf, die eine topfartige Hülse 28 umfasst, welche durch einen Draht 29 getragen wird. Der Draht 29 weist einen gerade, entlang der Mittelachse der Hülse 28 verlaufenden Trage- und Führungsabschnitt sowie einen Befestigungsabschnitt 30 auf, der hier, nach Art einer Rundfeder gebogen, in die Nut 24 eingreift. Das Schließelement 12 ist als eine weitere topfartige Hülse 31 auf die Hülse 28 aufgesteckt und weist eine zentrale Durchgangsöffnung für den Draht 29 auf. Der Draht 29 und die Hülse 28 führen die Hülse 31, die ersichtlich beweglich gelagert ist. Dabei entspricht der Außendurchmesser der Hülse 28 dem Innendurchmesser der Hülse 31. Die Hülsen 28, 31 definieren also eine seitlich geschlossene Expansionskammer 32, welche solange bestehen bleibt, wie der Bewegungsweg der Hülse 31 die Hülsen nicht zur Bildung einer seitlichen Öffnung voneinander beabstandet.

Auf der Hülse 28 innerhalb der Expansionskammer 32 ist das thermisch reaktive Material 22 angeordnet.

Steigt nun die Temperatur über die Reaktionstemperatur des thermisch reaktiven Materials 22, so dehnt sich dieses aus und presst die Hülse 31, also das Schließelement 12, nach oben, bis es an einer Schulter 33 an der Öffnung 14 anliegt und diese verschließt, wie in Fig. 5 dargestellt ist. Der Übersichtlichkeit halber ist in Fig. 5 das ausgedehnte Material 22 nicht gezeigt.

Ersichtlich bildet dann die Expansionskammer 32 noch immer einen seitlich geschlossenen Raum. So dehnt sich das Material 22 definiert aus und presst das Schließelement 12 in die geschlossene Stellung.

In dem in den Fig. 4 und 5 gezeigten Ausführungsbeispiel sind jedoch auch kleine Materialöffnungen 34, die vorliegend weniger als 5 % der Gesamtfläche der Verschlussfläche des Schließelements 12 bilden, in der Verschlussfläche vorgesehen, so dass, nachdem das Schließelement 12 mittels der Schulter 33 seine geschlossene Stellung erreicht hat, sich ausdehnendes Material 22 austreten kann, welches mit der Nut 24, dem Befestigungsabschnitt 30 und dem Leitungsabschnitt 23 verklebt und somit auch verbliebene Spalte gasdicht abschließt.

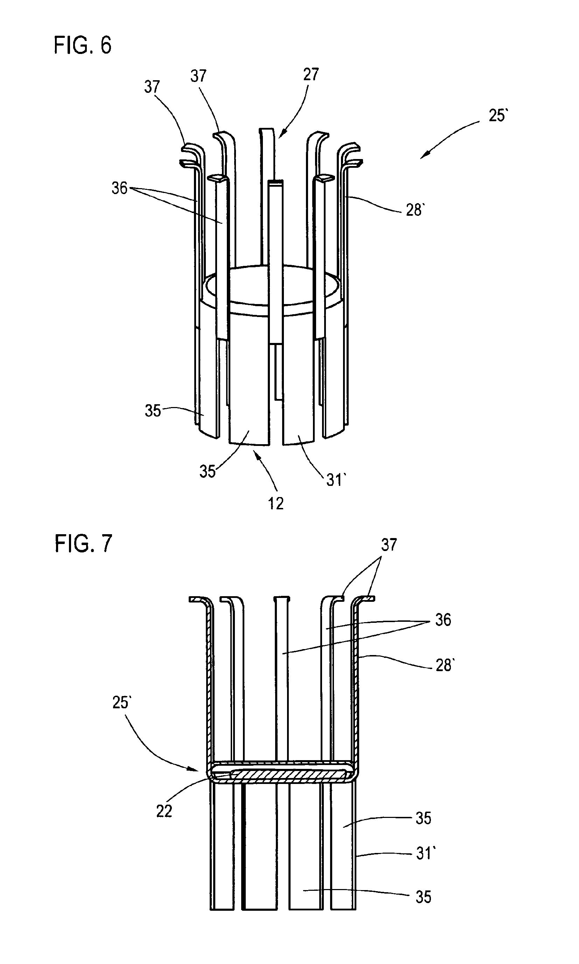

Ein alternatives Ausführungsbeispiel eines Brandschutzeinsatzes 25' zeigt die perspektivische Ansicht in Fig. 6. Dabei sind die das Schließelement 12 bildende Hülse 31' und die die Halterungsvorrichtung 27 bildende Hülse 28' als geschlitzte Hülsen ausgebildet, wobei die Stege 35 des Schließelements 12 passgenau zwischen den Stegen 36 der Halterungsvorrichtung 27 eingreifen. Die Stege 36 sind zudem elastisch und weisen an ihrem oberen Ende Vorsprünge 37 auf, die in die Nut 24 im Leitungsabschnitt 23 eingreifen und somit Befestigungsmittel bilden. Ein Draht ist mithin nicht erforderlich, die Hülse 31' wird durch die Hülse 28' geführt. Wie aus der Querschnittsansicht in Fig. 7 ferner ersichtlich ist, ist wiederum das Material 22 in der Expansionskammer 32 zwischen den ineinandereingreifenden Hülsen 28' und 31' vorgesehen.

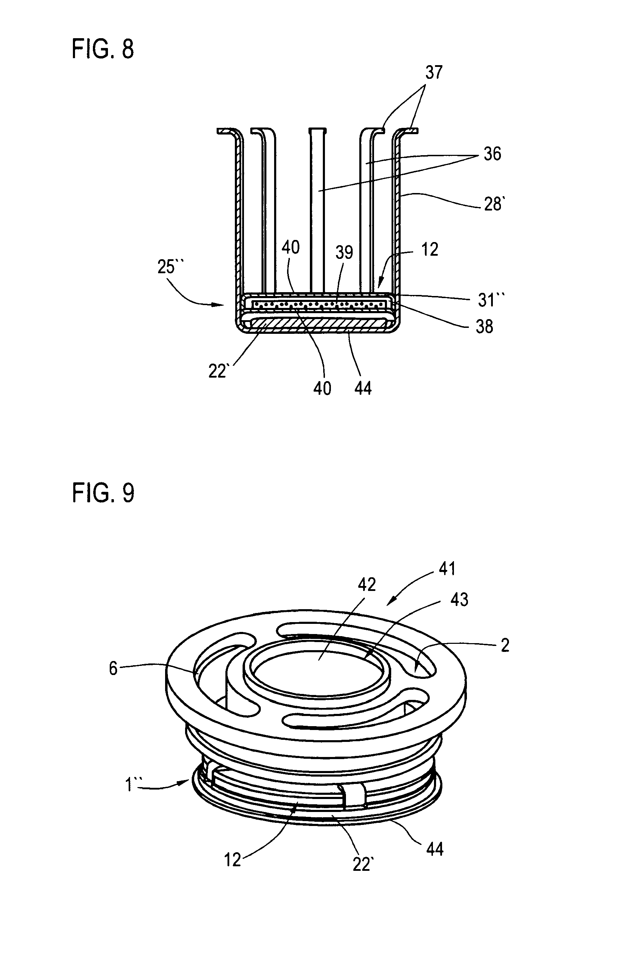

Ein weiteres alternatives Ausführungsbeispiel eines Brandschutzeinsatzes 25" zeigt die Schnittansicht der Fig. 8. Ersichtlich ist die das Schließelement 12 bildende Hülse 31" gegenüber der Hülse 31' in zweierlei Hinsicht modifiziert. Zum einen weist die Hülse 31" nur äußerst kurze Führungsabschnitte auf, um zwischen den Stegen 36 der Halterungsvorrichtung 27 als Führungsstruktur geführt zu werden. Somit ist in diesem Fall keine geschlossene Expansionskammer bei Ausdehnung des Materials 22' gegeben, das weiterhin auf einem als Stützplatte 44 wirkenden Anteil der Hülse 28' gelagert ist.

Dies ist jedoch auch nicht nötig, nachdem das Material 22' in diesem Fall ein in einer Vorzugsrichtung expandierendes Material 22' ist, wobei es sich beispielsweise um ein Treibmittel auf Silikatbasis mit kristallin gebundenem Wasser handeln kann. Das bedeutet, bei einer Temperatur von 100°C oder höher expandiert das Material 22' und schiebt das Schließelement 12, geführt durch die Stege 36, analog Fig. 5 bis an die Schulter 33. Die Vorzugsrichtung, in der das Material 22' expandiert, entspricht also der Schließrichtung, so dass hier keine geschlossene Expansionskammer mehr erforderlich ist, um das mittels des Brandschutzeinsatzes 25" gebildete Brandschutzventil zu schließen. Entsprechend lässt es sich platzsparender und konstruktiv einfacher realisieren.

Doch auch das Schließelement 12 ist hier modifiziert ausgebildet, nachdem es nun eine Aufnahme 38 umfasst, in der ein zweites, thermisch reaktives Material 39 angeordnet ist. Das zweite Material 39 hat eine höhere Reaktionstemperatur als das erste Material 22', beispielsweise 190°C. Es dehnt sich dreidimensional aus, schäumt also in alle Richtungen, wobei beispielsweise ein Material 39 auf Graphitbasis verwendet werden kann.

Die Aufnahme 38 wird beidseitig begrenzt durch plattenartige Abschnitte 40 der Hülse 31", die fest miteinander verbunden sind, insbesondere über die zwischen den Stegen 36 geführten Führungsabschnitte.

Liegt das Schließelement 12 an der Schulter 33 an, so wird die Aufnahme 38 ersichtlich durch die in diesem Bereich vorliegenden Seitenwände des Gasleitelements 6 begrenzt, so dass sich insgesamt eine Expansionskammer für das zweite Material 39 ergibt. Dieses steht also bei der Expansion unter einem hohen Druck, so dass die verbleibenden Spalte verlässlich durch eine feste und kompakte Masse abgedichtet werden.

Die Ausgestaltung mit einem zweiten Material 39 lässt sich auch bei den zuvor beschriebenen Ausführungsbeispielen einsetzen.

Schließlich zeigen die Figuren 9 - 11 ein drittes Ausführungsbeispiel eines erfindungsgemäßen Brandschutzventils 1 ", das im vorliegenden Fall in einem Einrohranschluss 41 integriert gezeigt ist. Dort bildet ein zentraler, zylinderartiger Gasleitabschnitt 42 den Gas-auslass 43, während den Gasauslass 43 mit einem ringförmigen Querschnitt umgebend der Gaseinlass 2 als Gasleitelement 6 des Brandschutzventils 1" gegeben ist.

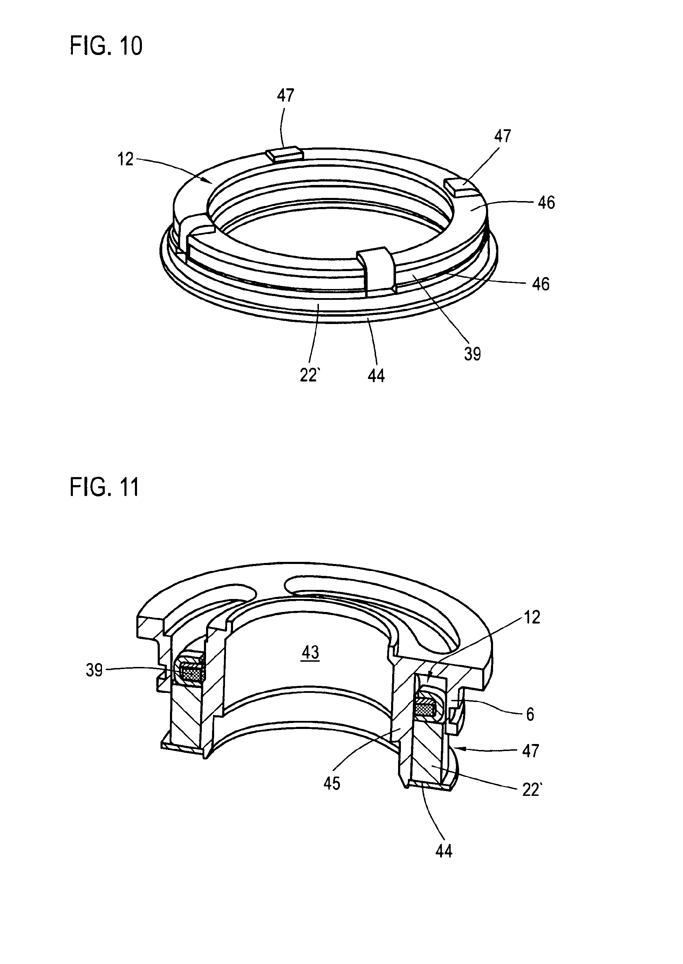

Weitere Komponenten des Brandschutzventils 1" sind am besten in Fig. 10 zu erkennen. Eine Stützplatte 44 ist an der über den Gasleitabschnitt hinaus verlängerten Trennwand 45 (vgl. Fig. 11) durch Verstemmen befestigt. Auf der Stützplatte 44 ist ringförmig das wiederum in einer Vorzugsrichtung expandierende Treibmittel 22' gelagert, welches das Schließelement 12 trägt. Das Material 22' ist ein Treibmittel auf Silikatbasis, welches kristallin gebundenes Wasser umfasst und daher bei 100°C expandiert, und zwar in einer Vorzugsrichtung derart, dass das Schließelement 12 in das Gasleitelement 6 geschoben wird, wie dies in Fig. 11 gezeigt ist.

Das Schließelement 12 besteht aus zwei Platten 46, die über Klammern 47 fest miteinander verbunden sind und dabei zwischen sich eine Aufnahme für ein zweites, thermisch reaktives Material 39 bilden. Dieses ist ein aufschäumendes Material auf Graphitbasis, welches bei 190°C reagiert und in alle Richtungen aufschäumt.

Im Brandfall löst nun zunächst das erste thermisch reaktive Material 22' aus und schiebt das Schließelement 12 in den Gasleitabschnitt 6, also den Gaseinlass, vorbei an der seitlichen Öffnung 47, durch die das Gas normalerweise in den Gaszähler einströmt. Diese Situation ist in Fig. 11 gezeigt. Wie dort auch ersichtlich ist, bilden die Platten 46 gemeinsam mit den Wänden des Gasleitabschnitts 6 eine nach allen Seiten weitgehend geschlossene Expansionskammer, so dass in der zweiten Stufe das zweite thermisch reaktive Material 39 unter hohem Druck expandiert und die verbliebene Spalte mit einer festen, kompakten Masse verschließt.

## Patentansprüche

1. Brandschutzventil (1. 1', 1"), insbesondere für den Gaseinlass (2) eines Gaszählers (3, 3'), mit einem insbesondere zylindrischen, rohrartigen Gasleitelement (6) und einem zum Verschließen einer Öffnung (14) des Gasleitelements (6) ausgebildeten Schließelement (12), **dadurch gekennzeichnet, dass** das Schließelement (12) derart mit einem thermisch reaktiven, insbesondere aufschäumenden, Material (22, 22') gekoppelt ist, dass durch eine erwärmungsbedingte Ausdehnung des thermisch reaktiven Materials (22, 22') das Schließelement (12) in eine die Öffnung (14) verschließende Stellung bewegt wird.

2. Brandschutzventil nach Anspruch 1, **dadurch gekennzeichnet, dass** ein gegen das Gasleitelement (6) bewegbares Ventilelement (8) mit einem an dem Gasleitelement (6) geführten Führungsabschnitt (9) und dem mit dem Führungsabschnitt (9) durch einen gasdurchlässigen Abschnitt (10) gekoppelten Schließelement (12), insbesondere einer Ventilkappe (13), sowie ein das Gasleitelement (6) und das Ventilelement (8) umschließendes Gehäuse (5) vorgesehen sind, wobei zwischen dem Gasleitelement (6) und dem Gehäuse (5) eine Expansionskammer (17) gebildet ist, die durch einen Trennabschnitt (19) des Ventilelements (8) in einen Materialbereich (21) und einen Expansionsbereich (20) derart aufgeteilt ist, dass bei einer erwärmungsbedingten Ausdehnung des in dem Materialbereich (21) angeordneten thermisch reaktiven Materials (22) der Trennabschnitt (19) in den Expansionsbereich (20) gepresst wird, bis das Schließelement (13) den Gasleitabschnitt (6) verschließt, wobei vorzugsweise weiterhin vorgesehen ist, dass der hülsenartig ausgebildete Führungsabschnitt (9) den Gasleitabschnitt (6) koaxial umschließt und zwischen der Gehäusewand und dem Gasleitabschnitt (6) geführt ist.

3. Brandschutzventil nach Anspruch 2, **dadurch gekennzeichnet, dass** der Trennabschnitt (19) durch einen am Rand des Führungsabschnitts umgebogenen Kragen (18) gebildet ist.

4. Brandschutzventil nach einem der Ansprüche 2 oder 3, **dadurch gekennzeichnet, dass** das Gehäuse (5) durch einen Gewindeanschluss (4) des Gaszählers (3) gebildet wird.

5. Brandschutzventil nach Anspruch 1, **dadurch gekennzeichnet, dass** das Gasleitelement (6) durch den in das Innere (26) des Gaszählers (3') mündenden Leitungsabschnitt (23) des Einlasses (2) gebildet wird, wobei bevorzugt weiterhin vorgesehen ist, dass ein mittels wenigstens eines Befestigungsmittels in dem Leitungsabschnitt (23) befestigter Brandschutzeinsatz (25, 25', 25") vorgesehen ist, der eine das im Einbauzustand bei nicht ausgedehntem Material (22) außerhalb des Leitungsabschnitts (23) befindliche Schließelement (12) führende und tragende Halterungsvorrichtung (27) umfasst.

6. Brandschutzventil nach Anspruch 5, **dadurch gekennzeichnet, dass** die Halterungsvorrichtung (27) und das Schließelement (12), welche insbesondere als ineinander gesteckte Hülsen (28, 28', 31, 31') ausgebildet sind, eine Expansionskammer (32) für das Material (22) definieren, wobei vorzugsweise weiterhin vorgesehen ist, dass in der die Öffnung (14) verschließenden Fläche des Schließelements (12) wenigstens eine Materialöffnung (34) vorgesehen ist.

7. Brandschutzventil nach einem der Ansprüche 5 oder 6, **dadurch gekennzeichnet, dass** das Befestigungsmittel ein in eine Nut (24) des Leitungsabschnitts (23) eingreifender Abschnitt (30) oder Vorsprung (37) der Halterungsvorrichtung (27) ist.

8. Brandschutzventil nach Anspruch 1 oder 5, **dadurch gekennzeichnet, dass** das thermisch reaktive Material (22') ein in einer Vorzugsrichtung expandierendes Material ist, wobei das Material (22') so angeordnet ist, dass die Vorzugsrichtung der Schließrichtung des Schließelements (12) entspricht, wobei das Material (22') vorzugsweise ein Treibmittel auf Silikatbasis mit kristallin gebundenem Wasser ist.

9. Brandschutzventil nach Anspruch 8, **dadurch gekennzeichnet, dass** das von einer Stützplatte (44) getragene Material (22') das, insbesondere an einer wenigstens teilweise zu der Stützplatte (44) hin verlaufenden Begrenzungswand des Gasleitelements (6) und/oder an einer die Stützplatte (44) mit dem Gasleitelement (6) verbindenden Führungsstruktur geführte, Schließelement (12) trägt.

10. Brandschutzventil nach einem der vorangehenden Ansprüche, **dadurch gekennzeichnet, dass** das Schließelement (12) eine Aufnahme (38) mit einem zweiten, bei einer höheren Temperatur als das erste, das Schließelement (12) bewegende thermisch reaktive Material (22, 22') reagierenden, thermisch reaktiven Material (39) aufweist, wobei das Schließelement (12) bevorzugt durch zwei parallele, fest verbundene Platten (46) gebildet wird, zwischen denen das zweite Material (39) angeordnet ist.

11. Brandschutzventil nach einem der vorangehenden Ansprüche, **dadurch gekennzeichnet, dass** das Schließelement (12) eine thermisch beständige Dichtung (15) umfasst.

12. Brandschutzventil nach einem der vorangehenden Ansprüche, **dadurch gekennzeichnet, dass** es wenigstens eine Schließeinrichtung zum reversiblen Schließen und Öffnen des Ventils (1, 1', 1 ") durch das Schließelement (13) unabhängig von dem Material (22, 22') umfasst, wobei die Schließeinrichtung vorzugsweise eine magnetische Schließeinrichtung ist.

13. Gaszähler (3, 3'), umfassend einen mit einem Brandschutzventil (1, 1', 1 ") nach einem der vorangehenden Ansprüche versehenen Gaseinlass (2).

14. Brandschutzeinsatz (25, 25', 25") zum Einsetzen in einen in dem Innenraum (26) eines Gaszählers (3') endenden, als Gasleitelement (6) wirkenden Leitungsabschnitt (23) des Gaszählers (3') zur Bildung eines Brandschutzventils (1') nach Anspruch 1, umfassend eine das im Einbauzustand bei nicht ausgedehntem Material (22, 22') außerhalb des Leitungsabschnitts (23) befindliche Schließelement (12) führende und tragende Halterungsvorrichtung (27) mit wenigstens einem Befestigungsmittel zum Befestigen des Brandschutzeinsatzes (25, 25', 25") in dem Leitungsabschnitt (23).
